(19) Europäisches Patentamt
European Patent Office
Office européen des brevets

(11) Veröffentlichungsnummer : **0 533 682 B1**

(12) # EUROPÄISCHE PATENTSCHRIFT

(45) Veröffentlichungstag der Patentschrift :
**13.12.95 Patentblatt 95/50**

(51) Int. Cl.$^6$ : **G01N 27/66**

(21) Anmeldenummer : **91907442.7**

(22) Anmeldetag : **09.04.91**

(86) Internationale Anmeldenummer :
**PCT/DE91/00295**

(87) Internationale Veröffentlichungsnummer :
**WO 92/18859 29.10.92 Gazette 92/27**

(54) **VERFAHREN UND VORRICHTUNG ZUM NACHWEISEN VON MESSUBSTANZEN IN EINER UMGEBUNGSSUBSTANZ, INSBESONDERE ZUM NACHWEISEN GASFÖRMIGER KAMPFSTOFFE IN UMGEBUNGSLUFT**

(43) Veröffentlichungstag der Anmeldung :
**31.03.93 Patentblatt 93/13**

(45) Bekanntmachung des Hinweises auf die Patenterteilung :
**13.12.95 Patentblatt 95/50**

(84) Benannte Vertragsstaaten :
**BE CH DE FR GB IT LI NL**

(56) Entgegenhaltungen :
**EP-A- 0 253 155**
**DE-A- 2 532 660**
**DE-C- 623 659**
**GB-A- 1 564 499**

(73) Patentinhaber : **BRUKER-SAXONIA ANALYTIK GMBH**
**Permoserstrasse 15**
**D-04318 Leipzig (DE)**

(72) Erfinder : **DÖRING, Hans-Rüdiger**
**Ludwigstrasse 131**
**D-7050 Leipzig (DE)**
Erfinder : **HARTMANN, Eberhard**
**W.-Pleck-Allee 18/0203**
**D-7060 Leipzig (DE)**

(74) Vertreter : **Witte, Alexander, Dr.-Ing. et al**
**Witte, Weller, Gahlert & Otten**
**Patentanwälte**
**Rotebühlstrasse 121**
**D-70178 Stuttgart (DE)**

EP 0 533 682 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Nachweisen von Meßsubstanzen in einer Umgebungssubstanz, insbesondere zum Nachweisen gasförmiger Kampfstoffe in Umgebungsluft, bei dem zunächst aus einer Reaktionssubstanz leichte Reaktionsionen erzeugt und diese dem Gemisch aus Meßsubstanz und Umgebungssubstanz zugefügt werden, derart, daß sich Reaktionsionen in einer Meßkammer in räumlich inhomogener Verteilung an schwere Moleküle der Meßsubstanz zur Bildung von Molekülionen anlagern, daß in der Meßkammer ein zeitvariantes und um eine Nullinie alternierendes elektrisches Feld einer vorbestimmten Grundfrequenz und Amplitude erzeugt, der sich infolge des elektrischen Feldes einstellende Molekülionenstrom gemessen und das Meßsignal ausgewertet wird.

Die Erfindung betrifft ferner eine Vorrichtung zum Nachweisen von Meßsubstanzen in einer Umgebungssubstanz, insbesondere zum Nachweisen gasförmiger Kampfstoffe in Umgebungsluft, mit einer Meßkammer, mit ersten Mitteln zum Einleiten des Gemisches aus Meßsubstanz und Umgebungssubstanz in die Meßkammer, mit zweiten Mitteln zum Erzeugen von leichten Reaktionsionen aus einer Reaktionssubstanz und zum Zufügen der Reaktionsionen zu dem Gemisch, mit dritten Mitteln zum Anlagern der Reaktionsionen an schwere Moleküle der Meßsubstanz in der Meßkammer, mit vierten Mitteln zum Erzeugen eines um eine Nullinie alternierenden elektrischen Feldes einer vorbestimmten Grundfrequenz und Amplitude in der Meßkammer, wobei die vierten Mittel als Elektrodenpaar in der Meßkammer sowie als mit dem Elektrodenpaar verbundene Spannungsquelle ausgebildet sind, und mit fünften Mitteln zum Erfassen und Auswerten des von dem elektrischen Feld in der Meßkammer verursachten Molekülionenstroms.

Ein Verfahren und eine Vorrichtung der vorstehend genannten Art sind aus dem Aufsatz "Detection of Chemical Warfare Agents by means of an Ionization Chamber Operated in AC Mode" von Milinkovic, S. u.a. in "Proc. 3rd Int. Symp. Protection Against Chemical Warfare Agents", Umea, Schweden, 11. bis 16. Juni 1989, bekannt.

In vielen Bereichen des Umweltschutzes und der Wehrtechnik ist es erwünscht, bestimmte Meßsubstanzen, vorzugsweise gesundheitsgefährdende Meßsubstanzen in einer Umgebung aus Luft, Wasser oder dgl. nachweisen zu können. Wenn in diesem Zusammenhang Meßsubstanzen hoher Gefährlichkeit nachgewiesen werden sollen, beispielsweise gasförmige Kampfstoffe, so ist nicht nur eine hohe Nachweisempfindlichkeit und -sicherheit erwünscht, es werden vielmehr auch hohe Anforderungen an die Ansprechgeschwindigkeit gestellt. Dies gilt vor allem dann, wenn nicht bekannt ist, ob die betreffende Umgebung überhaupt mit den fraglichen Meßsubstanzen versehen ist, weil dann eine ständige Überwachung auf ein Auftreten dieser Meßsubstanzen stattfindet und möglichst schnell ein Alarm ausgelöst werden soll, wenn das Auftreten dieser Meßsubstanzen festgestellt wird.

Im Bereich der Wehrtechnik betrifft dies vor allem den Bereich der Giftgase, die in unterschiedlicher Zusammensetzung und Wirkungsweise bekannt sind.

So unterscheidet man bei den Giftgasen im wesentlichen die Hautgifte einerseits und die Nervengifte andererseits. Während die Hautgifte auf die menschliche Haut wirken und dort Verätzungen und Verbrennungen hervorrufen, wirken die Nervengifte auf das menschliche Nervensystem und führen zu Atemlähmungen und dgl..

Bei den Hautgiften sind die bekanntesten die Senfgase, hier insbesondere das unter der Bezeichnung Schwefellost bekannte 2, 2'-Dichlordiethylsulfid mit der Strukturformel:

$$Cl\text{-}CH_2\text{-}CH_2\text{-}S\text{-}CH_2\text{-}CH_2\text{-}Cl$$

sowie das unter der Bezeichnung Stickstofflost bekannte Tris (2-Chlorethyl)-Amin mit der Strukturformel

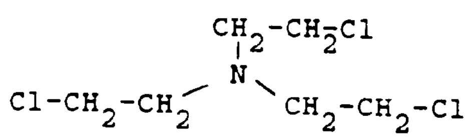

oder

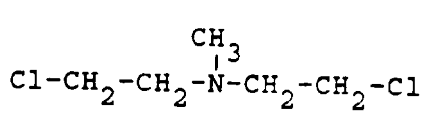

Bei den Nervengiften sind die wesentlichen der unter der Bezeichnung Tabun bekannt Dimethylphosphoramidocyansäureethylester mit einem Molekulargewicht von 162 amu und der Strukturformel:

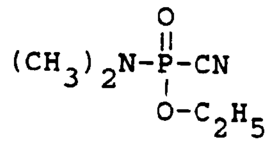

sowie die unter der Bezeichnung Sarin bzw. Soman bekannten O- - Isopropyl - bzw. Pinakolyl - Ester der Methylfluorphosphonsäure mit Molekulargewichten von 140 bzw. 182 amu und der Strukturformel:

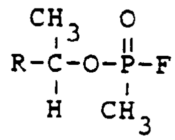

R= $-CH_3$ R= $-C(CH_3)_3$

Schließlich sind bei den gasförmigen Kampfstoffen noch die unter der allgemeinen Bezeichnung V-Kampfstoffe bekannten Phosphorylthiocholine mit Molekulargewichten von 267 amu und der Strukturformel

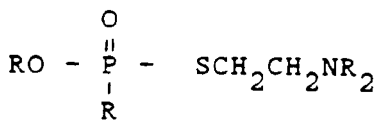

zu nennen, insbesondere der sogenannte VX-Kampfstoff mit einem noch höheren Molekulargewicht und der Strukturformel

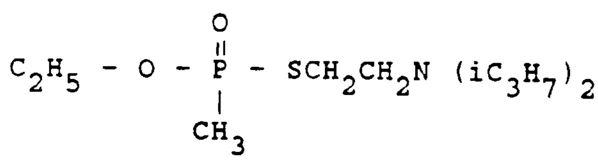

Zum Nachweis dieser chemischen Kampfstoffe sind bereits verschiedene Verfahren und Vorrichtungen bekannt. Einige dieser bekannten Verfahren und Vorrichtungen beruhen auf dem Nachweis beweglicher Ionen.

So wird in dem eingangs genannten Aufsatz von Milinkovic eine koaxiale Ionisationskammer beschrieben, bei der in einem zylindrischen Gehäuse ein radialer Einlaßstutzen und ein gegenüberliegender radialer Auslaßstutzen für ein Gasgemisch vorgesehen sind. Aus der Umgebung wird zu diesem Zwecke Gas angesaugt und über den Einlaßstutzen in die Meßkammer eingesaugt, um dann über den Auslaßstutzen nach erfolgter Messung wieder abgeführt zu werden.

Die bekannte Meßkammer verwendet eine Zylinderelektroden-Anordnung mit einer axialen Innenelektrode und einer auf dem Zylindermantel angeordneten Außenelektrode, wobei der zu untersuchende Gasstrom den Zwischenraum zwischen den beiden Elektroden durchströmt. Am axialen Ende der Meßkammer befindet sich in einer radialen Ebene eine Strahlungsquelle, die ebenfalls den von Gas durchströmten Raum beeinflußt.

Bei der bekannten Vorrichtung wird nun Umgebungsluft durch die Meßkammer bei konstanter Flußrate gepumpt und mittels der radioaktiven Quelle ionisiert. Dies geschieht in der Weise, daß sogenannte Reaktionsionen aus der Umgebungsluft ($0_2$, $N_2$) in Verbindung mit der Luftfeuchtigkeit ($H_2O$) gebildet werden. Im einzelnen geschieht dabei folgendes:

Zunächst wird die Umgebungsluft ($O_2$, $N_2$) unter der Einwirkung von β-Strahlung ionisiert, so daß $O_2^+$ und $N_2^+$-Ionen sowie freie Elektronen $e^-$ gebildet werden.

Betrachtet man nun beispielsweise die $N_2^+$-Ionen, so verbinden sich diese zunächst mit einem Stickstoffmolekül $2N_2$ zu $N_4^+$ und $N_2$. Das $N_4^+$ reagiert wiederum mit der Luftfeuchtigkeit ($H_2O$) zu 2N2 und $H_2O^+$. Das $H_2O^+$ reagiert wiederum mit dem $H_20$ der Luftfeuchtigkeit zu $H_3O^+$ und OH, was einer Reaktion ($H_20$) $H^+$ mit $H_2O$ zu den positiven Reaktionsionen $(H_2O)_8H^+$ entspricht. Dieses positive Reaktionsion hat ein Gewicht von 145 amu und eine Beweglichkeit von $2cm_2/Vs$.

In entsprechender Weise läßt sich für die negativen Reaktionsionen zeigen, daß das $O_2$ und die freien Elektronen $e^-$ schlußendlich mit der Luftfeuchtigkeit $H_2O$ zu $(H_2O)_6O_2$, dem negativen Reaktionsion reagieren. Dieses hat ein Gewicht von etwa 140 amu und ebenfalls eine Beweglichkeit in der Größenordnung von $2cm^2/Vs$.

Die vorstehend erläuterten positiven bzw. negativen Reaktionsionen reagieren nun mit den Molekülen ggf. vorhandener gasförmiger Kampfstoffe. Bezeichnet man die Moleküle der Nervengifte (Phosphororganika) mit $M_A$ und die Moleküle der Hautgifte, insbesondere des Schwefel-Losts mit $M_B$, so lassen sich folgende Reaktionen hinschreiben:

$$(H_20)_8H^+ + M_A \rightarrow M_A(H_2O)_6H^+ + 2H_2O$$

$$M_A(H_20)_6H^+ + M_A \rightarrow M_{A2}H^+ + 6H_2O$$

wobei bei höheren Konzentrationen der Phosphororganika auch die Bildung von $M_{A3}H^+$ möglich ist.

Bei den Hautgiften ergibt sich entsprechend folgendes:

$$(H_2O)_6O_2^- + M_B \rightarrow M_B\ (H_2O)_4O_2^- + 2H_2O$$

Die auf diese Weise gebildeten Quasi-Molekülionen oder Produktionen haben im Fall der Phosphororganika eine Beweglichkeit in der Größenordnung von 1,5 bis 0,5 $cm^2/Vs$ bei einem Molekulargewicht im Bereich von 250 bis 700 amu, während bei den Hautgiften (Schwefellost) die Ionenbeweglichkeit ca. 1,5 $cm^2/Vs$ bei einem Molekulargewicht von 250 amu beträgt.

Die vorstehende Erläuterung zeigt, das erwartbare Ergebnis, daß nämlich die Reaktionsionen nach Gewicht und Beweglichkeit wesentlich leichter und schneller sind als die Produktionen bzw. Quasi-Molekülionen mit wesentlich höheren Molekulargewichten bei gleichzeitig niedrigerer Beweglichkeit.

In der nachstehenden Beschreibung soll aus Gründen der Einfachheit für die Reaktionsionen mit den Kürzeln "$H^{+}$" bzw. "$O_2$" und bei den Quasi-Molekülionen mit den Kürzel "$M_A^{+}$" bzw. "$M_B^{-}$" gearbeitet werden.

Wenn nun das die Meßkammer durchströmende Gas auch Meßsubstanzen, insbesondere gasförmige Kampfstoffe enthält, die Moleküle mit wesentlich höherem Molekulargewicht aufweisen, so lagern sich die vorstehend genannten Reaktionsionen an den Molekülen der Meßsubstanzen an.

Die Art der Anlagerung, d.h. die Frage, ob sich die positiv geladenen Protonen oder die negativ geladenen Sauerstoffionen an den Molekülen der Meßsubstanzen anlagern, hängt von der Natur der Meßsubstanzen ab.

Bei den oben erläuterten gasförmigen Kampfstoffen sind die Verhältnisse so, daß sich bei den Losten (Senfgasen) die negativ geladenen Reaktionsionen an den Lost-Molekülen anlagern, während bei den Nervengiften (Tabun, Sarin, Soman, V-Kampfstoffe, insbesondere VX) ein Protonentransfer von den positiv geladenen Reaktionsionen zu den Kampfstoffmolekülen stattfindet. Bei der letzteren Reaktion ist es auch möglich, daß jeweils zwei Moleküle der Meßsubstanz paarweise ein Proton binden.

Wichtig ist im vorliegenden Zusammenhang vor allem, daß bei den beiden Arten von gasförmigen Kampfstoffen, nämlich bei den Hautgiften (Losten) einerseits und den Nervengiften (Tabun, Sarin, Soman, VX-Kampfstoffe) andererseits sich jeweils unterschiedlich geladene Molekülionen, nämlich negativ geladene Quasi-Molekülionen bei den Hautgiften und positiv geladene Quasi-Molekülionen bei den Nervengiften, herausbilden.

Wichtig ist bei der bekannten Vorrichtung ferner, daß die radioaktive Quelle so angeordnet ist, daß sie in dem Meßraum der Meßkammer eine räumlich inhomogene Verteilung von Reaktionsionen und damit auch von Quasi-Molekülionen hervorruft. Die Inhomogenität der räumlichen Verteilung ist dabei so ausgebildet, daß im Mittel die Entfernung der Quasi-Molekülionen zu der einen Elektrode länger ist als zu der anderen Elektrode.

Bei der bekannten Vorrichtung wird nun an die Elektrodenanordnung eine Wechselspannung angelegt. Das sich auf diese Weise einstellende alternierende, d.h. um eine Nullinie schwankende elektrische Feld übt nun während der einen Halbwelle eine Kraft auf die Quasi-Molekülionen in Richtung auf die eine Elektrode und in der anderen Halbwelle in Richtung auf die andere Elektrode aus. Da jedoch, wie erwähnt, die mittlere Wegstrecke für die Quasi-Molekülionen zu den beiden Elektroden unterschiedlich lang sind, fließt in der einen Halbwelle ein größerer Ionenstrom als in der anderen Halbwelle, weil bei entsprechend hoher Frequenz des elektrischen Feldes die halbe Periodendauer nicht ausreicht, um alle verhältnismäßig schwere Quasi-Molekülionen zu der jeweiligen Zielelektrode zu bringen.

Als Ergebnis ergibt sich daher bei der bekannten Anordnung ein Gleichstromanteil des Ionenstromes. Das Vorzeichen dieses Gleichstromanteils hängt nun davon ab, welcher Art die Meßsubstanz in der Umgebungsluft ist. Handelt es sich dabei um eines der oben beschriebenen Hautgifte mit negativ geladenen Quasi-Molekülionen, so ist das Vorzeichen des Gleichstromanteils positiv, während es bei Nervengiften negativ ist.

Bei der bekannten Vorrichtung ergibt sich somit je nach Art des nachgewiesenen gasförmigen Kampfstoffes ein positives oder ein negatives Ausgangssignal, wobei bekannt ist, dieses Ausgangssignal der Amplitude nach durch geeignetes Einstellen der Frequenz des elektrischen Feldes noch zu optimieren.

Die bekannte Vorrichtung hat jedoch den Nachteil, daß sie systematisch dann zu Meßfehlern oder gar zum

Versagen führt, wenn in der Umgebung nicht ausschließlich Meßsubstanzen der einen Art vorhanden sind, sondern vielmehr Gemische aus Meßsubstanzen beider Arten, also beispielsweise gleichzeitig Hautgifte und Nervengifte.

Andererseits besteht ein erhebliches Interesse daran, Verfahren und Vorrichtungen zur Verfügung zu haben, mit denen auch in derartigen Situationen, in denen gleichzeitig Hautgifte und Nervengifte eingesetzt werden, ein schneller und zuverlässiger Nachweis sowohl der einen wie auch der anderen Substanz möglich ist, ohne daß die Signale der einen Substanz die Signale der anderen Substanz kompensieren.

Ein weiteres Problem, das sich beim Nachweisen von Meßsubstanzen der hier interessierenden Art stellt, ist, daß der Nachweis dieser Meßsubstanzen differenziert werden muß von Störsubstanzen und anderen Störgrößen, wie sie in einer realen Umgebung auftreten.

Betrachtet man hierzu wiederum das Gebiet der Wehrtechnik, so ist es beispielsweise erforderlich, daß in einer Gefechtssituation ein selektiver Nachweis von gasförmigen Kampfstoffen möglich sein muß, auch wenn die Umgebungsluft zugleich von Kohlenwasserstoffdämpfen, beispielsweise auslaufendem Benzin, Dieselöl oder von Rauch oder anderen organischen Verbindungen durchsetzt ist. Ferner soll der Nachweis auch dann möglich sein, wenn während der Messung Schwankungen des Drucks, der Temperatur oder der Luftfeuchtigkeit auftreten. Die zuletzt genannten Störfaktoren können beispielsweise dann auftreten, wenn das Verfahren an Bord eines Fahrzeugs ausgeführt wird bzw. sich die Vorrichtung an Bord eines Fahrzeugs befindet. Ist das Fahrzeug beispielsweise ein Hubschrauber, so werden auf eine Meßvorrichtung zugleich zahlreiche Störeinflüsse ausgeübt, die möglichst beim Nachweisen dieser hochsensiblen Meßsubstanzen unterdrückt werden sollen.

Um den Einfluß von Störsubstanzen zu unterdrücken, ist es andererseits bekannt, sogenannte Tandem-Meßkammern zu verwenden. Derartige Tandem-Meßkammern verfügen über eine unveränderte Meßkammer, beispielsweise der eingangs genannten Art, und zusätzlich über eine zweite Referenzkammer, in deren Gaseinlaß ein Filter angeordnet ist, der die zu messenden Substanzen ausfiltert. Ein solches Filter kann bei der Messung von gasförmigen Kampfstoffen z.B. der übliche Filter einer Gasmaske sein.

Wenn eine solche Tandem-Meßkammer in einer Meßsituation eingesetzt wird, in der z.B. Benzindämpfe als Störgrößen einwirken, so werden diese Benzindämpfe von dem Filter der Referenzkammer nicht aufgehalten und durchsetzen damit gleichzeitig die Meßkammer und die Referenzkammer. Demzufolge verändern sich die Meßwerte beider Kammern gleichzeitig, so daß diese Art der Meßwerte als Störgrößen eliminiert werden können. Wenn hingegen ein gasförmiger Kampfstoff auf die Tandem-Meßkammer trifft, so durchsetzt dieser nur die Meßkammer, nicht jedoch die Referenzkammer, weil er gegenüber dieser über das Filter abgeschirmt wird, so daß sich ein echter Meßwert nur in der Meßkammer herausbildet.

Bei einer alternativen Bauform kann ein Filter auch vor eine Meßkammer gesetzt und von dieser wieder abgenommen werden, so daß die eine Meßkammer in zeitlicher Folge als Meßkammer und Referenzkammer dient.

Die zuletzt beschriebenen bekannten Anordnungen haben jedoch den Nachteil, daß sie mit einer großen Zeitkonstante behaftet sind. So sind nämlich in der Realität keine Filter verfügbar, die in idealer Weise die Meßsubstanz zurückhalten und alle anderen Substanzen unverzüglich frei durchlassen. In der Praxis sind die Verhältnisse vielmehr so, daß ein Filter auch für Störsubstanzen, beispielsweise Benzindämpfe, zumindest einen Widerstand darstellt, mit der Folge, daß sich die Referenzkammer nur langsam mit der Störsubstanz füllt, während diese ohne jede Behinderung in die Meßkammer bereits eingedrungen ist. Man muß daher, um Fehlmessungen zu vermeiden, stets eine gewisse Zeit zuwarten, damit sich zwischen Meßkammer und Referenzkammer ein Gleichgewicht eingestellt hat. Die dabei in der Praxis auftretenden Zeiten liegen dabei in der Größenordnung von Minuten, eine Zeit, die beim Nachweis gasförmiger Kampfstoffe jedoch zu hoch ist. Angestrebt werden vielmehr Reaktionszeiten in der Größenordnung von beispielsweise 10 Sekunden, so daß ein Alarm ausgelöst werden kann, ehe noch die plötzlich aufgetretenen gasförmigen Kampfstoffe Schaden angerichtet haben.

Aus der Zeitschrift "Isotopenpraxis", Band 26, Heft 4, Seiten 176 bis 180 (1990) ist eine mathematische Methode bekannt, um mittels eines Fortran-Programmes eine iterative Lösung von Differentialgleichungssystemen zu erreichen, die auf die Kinetik verschiedener physikalischer Prozesse anwendbar sind. Hierzu zählt z.B. ein Ionisations-Gasdetektor, bei dem in einer Meßkammer befindliche Ionen durch ein gepulstes elektrisches Feld beeinflußt werden.

Aus dem Aufsatz "New Ion Mobility Spektrometry Techniques" von Blanchard C., veröffentlicht in "Proceedings of the 1987 U.S. Army Scientific Conference on Chemical Defense Research", Aberdeen Proving Ground, MD, CRDBC-Sp-88013, 1971 (April 1988) ist ein Ionen-Mobilitäts-Spektrometer (IMS) bekannt, bei dem auf die beweglichen Ionen nichtlineare elektrische Felder ausgeübt werden. Diese nichtlinearen elektrischen Felder sind teilweise räumlich, teilweise zeitlich nichtlinear und sollen dazu dienen, um die Empfindlichkeit des Spektrometers zu erhöhen.

Aus der EP-A-0 253 155 ist eine Feldregelanordnung für ein Ionen-Mobilitäts-Spektrometer (IMS) bekannt, bei der ebenfalls ein zeitlich nichtlineares elektrisches Feld erzeugt wird. Das Schwergewicht bei diesem IMS liegt jedoch ebenso wie bei dem zuvor erläuterten IMS auf einer räumlichen Trennung von Bereichen unterschiedlichen Feldstärkeverlaufs. Die Möglichkeit des getrennten Nachweises von zwei Meßsubstanzen mit unterschiedlich geladenen Quasi-Molekülionen ist dabei weder angesprochen noch möglich.

Der Erfindung liegt daher die Aufgabe zugrunde, ein Verfahren und eine Vorrichtung der eingangs genannten Art dahingehend weiterzubilden, daß auch bei Gemischen unterschiedlicher Meßsubstanzen, insbesondere bei Gemischen von Hautgiften und Nervengiften, eine schnelle und differenzierte Messung mit evtl. erforderlicher Alarmgebung möglich wird.

Erfindungsgemäß wird diese Aufgabe gemäß einem Verfahren der eingangs genannten Art dadurch gelöst, daß zum Unterscheiden einer ersten Meßsubstanz von einer gleichzeitig in der Umgebungssubstanz anwesenden zweiten Meßsubstanz

- zunächst für eine definierte Meßkammer die Abhängigkeit des Quasi-Molekülionenstroms von der Grundfrequenz, der Amplitude sowie einer Asymmetrie des zeitlichen Verlaufes der elektrischen Feldstärke zur Nullinie jeweils isoliert für die erste sowie für die zweite Meßsubstanz bestimmt wird,
- alsdann eine erste Messung des Gemisches bei einer ersten Asymmetrie ausgeführt wird,
- nachfolgend eine zweite Messung des Gemisches bei einer zweiten Asymmetrie ausgeführt wird, und
- die Meßsignale beider Messungen logisch verknüpft werden.

Erfindungsgemäß wird die Aufgabe ferner bei einer Vorrichtung der eingangs genannten Art dadurch gelöst, daß die Spannungsquelle einen Umschalter umfaßt, über den zwei zur Nullinie unterschiedlich asymetrische Spannungsverläufe alternativ und nacheinander an das Elektrodenpaar schaltbar sind, und daß die fünften Mittel logische Schaltmittel zum Vergleich der gemessenen Quasi-Molekülionenstrom-Werte umfassen.

Die der Erfindung zugrundeliegende Aufgabe wird auf diese Weise vollkommen gelöst.

Dadurch, daß zwei Messungen nacheinander mit unterschiedlichen Meßparametern durchgeführtwerden, ist es nämlich möglich, bei den beiden Messungen die Meßsubstanzen unterschiedlich zu beeinflussen, so daß sich bei einer geeigneten Meßkammer zwei Meßwerte einstellen, aus denen sich das Vorhandensein einer der beiden oder beider Meßsubstanzen ermitteln läßt.

Es muß daher nach der vorliegenden Erfindung nicht mehr befürchtet werden, daß eine Kompensation der Meßwerte durch die unterschiedlich polarisierten Quasi-Molekülionen auftritt.

Ferner wird durch die definierten Meßverhältnisse, d.h. die vorbestimmte Einstellung der Grundfrequenz, der Amplitude und der Asymmetrie erreicht, daß hochselektiv gearbeitet werden kann, so daß zugleich eine Unterdrückung von Störsignalen möglich ist, die von Störstoffen in der Umgebung ausgelöst werden könnten.

Bei bevorzugten Varianten des erfindungsgemäßen Verfahrens wird in an sich bekannter Weise als Reaktionssubstanz Wasser verwendet, aus dem die Reaktionsionen durch radioaktive Bestrahlung erzeugt werden. Vorzugsweise wird hierzu ein β-Strahler in der Meßkammer angeordnet, wobei deren Innenabmessungen wesentlich größer als die Halbwerts-Reichweite des β-Strahlers eingestellt werden, damit sich die gewünschte inhomogene räumliche Verteilung ergibt.

Weiterhin ist bevorzugt, wenn zur Erzeugung des elektrischen Feldes eine vorzugsweise periodische Spannung verwendet wird. Die Spannung wird dabei weiter vorzugsweise mit einem zeitlichen Verlauf miteinander abwechselnden ersten und zweiten Impulsen oberhalb bzw. unterhalb der Nullinie eingestellt.

Die ersten Impulse werden dabei vorzugsweise zeitlich unmittelbar an die zweiten Impulse angeschlossen.

In diesem Zusammenhang wird eine besonders gute Wirkung dann erzielt, wenn die ersten Impulse mit der gleichen Impulsfläche wie die zweiten Impulse eingestellt werden.

Vorzugsweise werden die Impulse rechteckförmig eingestellt, wobei die ersten Impulse höher und schmaler als die zweiten Impulse sind, weiter vorzugsweise werden die ersten Impulse zwei- bis fünfmal so hoch wie die zweiten Impulse eingestellt.

Besonders vorteilhaft ist, wenn die erste und die zweite Asymmetrie dadurch eingestellt werden, daß für die erste Messung die Impulse mit einer ersten Polarität und für die zweite Messung mit entgegengesetzter Polarität versehen werden. Dies kann in einfacher Weise dadurch erreicht werden, daß lediglich das Vorzeichen der Spannung umgeschaltet wird.

Zur Durchführung des erfindungsgemäßen Verfahrens beim Nachweis von gasförmigen Kampfstoffen hat sich eine Grundfrequenz im Bereich zwischen 100 und 500 Hz besonders bewährt. Das Volumen der Meßkammer wurde dabei im Bereich von 0,5 und 5 $cm^3$ eingestellt. Die Spannung wurde mit einem Effektivwert im Bereich von 50 bis 200 V eingestellt.

Bei einer weiteren Gruppe von Ausführungsbeispielen des erfindungsgemäßen Verfahrens wird in einem weiteren, also dritten Verfahrensschritt ein konstantes elektrisches Feld mit zweibis zwanzigfacher Stärke, verglichen mit dem Effektivwert des alternierenden elektrischen Feldes, in der Meßkammer erzeugt, der sich einstellende Quasi-Molekülionenstrom wird gemessen und das dabei erhaltene Meßsignal mit den Meßsignalen der ersten und zweiten Messung verglichen.

Diese Maßnahme hat den Vorteil, daß durch diese dritte Vergleichsmessung sämtliche freien Ladungsträger in der Meßkammer durch die sehr hohe elektrische Feldstärke abgesaugt werden und damit ein Signal zur Verfügung steht, das die Gesamtanzahl der in der Meßkammer befindlichen freien Ladungsträger wiedergibt. Da diese Gesamtanzahl zugleich in das Meßsignal bei der ersten und der zweiten Messung eingeht, bei der jedoch sowohl die Konzentration der Meßsubstanzen wie auch die Konzentration evtl. vorhandener Störsubstanzen unbekannt sind, ist es möglich, diese unbekannten Werte aufgrund der Ergebnisse der drei Messungen zu bestimmen.

Weiterhin hat diese Maßnahme den Vorteil, daß auch störende Umgebungseinflüsse wie Schwankungen von Druck, Temperatur und Feuchtigkeit eliminiert werden, weil bei einer unmittelbaren zeitlichen Aufeinanderfolge der genannten insgesamt drei Messungen diese Störeinflüsse gleichermaßen in alle drei Messungen eingehen und daher beim Berechnen der interessierenden Größen, beispielsweise der Konzentration der Meßsubstanz, in der Rechnung herausfallen.

Bei bevorzugten Weiterbildungen der erfindungsgemäßen Vorrichtung ist die Meßkammer zylindrisch ausgebildet.

Diese Maßnahme hat den Vorteil, daß sich eine besonders einfache Bauform ergibt, die zugleich rechnerisch beherrschbare und reproduzierbare Verhältnisse zur Folge hat. Dies ist deswegen wichtig, weil nach dem weiter oben erläuterten erfindungsgemäßen Verfahren zunächst eine Eichung der Meßkammer vorgenommen wird, wozu man sich zweckmäßigerweise mathematischer Modelle bedient, die wiederum berechenbare geometrische Verhältnisse in der Meßkammer voraussetzen.

Bei einer bevorzugten Weiterbildung der erfindungsgemäßen Vorrichtung ist die Meßkammer mit einem radioaktiven Material ausgekleidet. Diese Maßnahme hat den an sich bekannten Vorteil, daß bei geeigneter Auswahl des radioaktiven Materials, beispielswese $Ni^{63}$ mit einer Aktivität von 10 mCi in einem zylindrischen Meßraum von 10 mm Durchmesser und 10 bis 30 mm Länge eine hinreichend inhomogene Verteilung der Reaktionsionen und damit Quasi-Molekülionen auftritt.

Bevorzugt ist ferner, wenn die Wandung der Meßkammer aus einem Kunststoff besteht, weil auf diese Weise deren Herstellung besonders einfach ist.

Weiterhin ist bevorzugt, wenn das Elektrodenpaar durch eine axiale Stabelektrode sowie durch eine elektrisch leitende Auskleidung des Zylindermantels der Meßkammer gebildet wird.

Diese Maßnahme hat den Vorteil, daß eine rechnerisch einfach beherrschbare Elektrodenanordnung entsteht. Ferner hat die Maßnahme den Vorteil, daß die radioaktive Auskleidung der Meßkammer zugleich als Außenelektrode verwendet werden kann.

Bevorzugt ist schließlich, wenn die Stabelektrode eine Oberfläche aus Edelstahl aufweist. Dies hat den Vorteil, daß ein elektrisch leitfähiger, chemisch jedoch nicht aktiver Körper für die Stabelektrode zur Verfügung steht.

Insgesamt hat die Erfindung damit den Vorteil, daß ein sehr schneller Nachweis von Meßsubstanzen möglich ist, beispielsweise können die genannten Hautgifte oder Nervengifte mit einer Meßzeit von etwa 10 Sekunden nachgewiesen werden und zwar in einem Konzentrationsbereich von typischerweise 10 bis 100 ppb.

Die Möglichkeit der Eichung der Meßkammer aufgrund mathematischer Modelle hat ferner den Vorteil, daß eine Optimierung für bestimmte Meßsubstanzen auch weitgehend ohne praktische Versuche möglich ist, so daß aufwendige, weil gefährliche Laborversuche mit unterschiedlich gebauten Meßkammern entbehrlich werden.

Die Erfindung kann daher mit Vorteil im gesamten Bereich der Umwelttechnik und der Wehrtechnik eingesetzt werden. Sie wird jedoch nachstehend weiter anhand des Beispiels des Nachweises von gasförmigen Kampfstoffen beschrieben, obwohl dieses Anwendungsgebiet die Erfindung keinesfalls einschränkt.

Es versteht sich ferner, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

- Fig. 1 eine perspektivische Ansicht, teilweise aufgebrochen, durch eine Meßkammer, wie sie im Rahmen der vorliegenden Erfindung Verwendung findet;
- Fig. 2 ein äußerst schematisiertes Blockschaltbild zur Erläuterung eines Ausführungsbeispiels einer erfindungsgemäßen Vorrichtung;
- Fig. 3 ein Eichdiagramm zur Erläuterung eines Ausführungsbeispiels des erfindungsgemäßen Verfahrens.

In Fig. 1 bezeichnet 10 eine zylindrische Meßkammer, die im wesentlichen durch einen zylindrischen Mantel 11, eine obere Endwand 12 und eine untere Endwand 13 begrenzt wird. Insoweit besteht die Meßkammer 10 vorzugsweise aus einem Kunststoff, beispielsweise einem Polyethylen oder einem Polypropylen und kann als Spritzgußgehäuse hergestellt werden.

In der oberen Endwand 12 befindet sich ein Einlaßstutzen 14, durch den, wie mit einem Pfeil 15 angedeutet, ein Medium angesaugt werden kann, beispielsweise Umgebungsluft.

In der unteren Endwand 13 befindet sich in entsprechender Weise ein Auslaßstutzen 16, der an eine Leitung 17 angeschlossen ist. Die Leitung 17 führt zu einer Saugpumpe 18. Die Endwände 12, 13 sind aus isolierendem Material, vorzugsweise Polyethylen oder Polypropylen hergestellt.

Entlang einer Achse 20 der Meßkammer 10 ist eine Stabelektrode 21 angeordnet, die durch die obere Endwand 12 hindurchgesteckt ist und von der unteren Endwand 13 vorzugsweise einen gewissen Abstand einhält. Die Stabelektrode 21 besteht zumindest an ihrer Oberfläche vorzugsweise aus einem chemisch inaktiven Material, beispielsweise Edelstahl. Die Stabelektrode 21 ist an eine erste Zuleitung 22 angeschlossen, die weiter unten noch erläutert werden wird.

Auf der Innenseite des zylindrischen Mantels 11 befindet sich eine Auskleidung 23 aus einem radioaktiven Material. Die Auskleidung 23 besteht vorzugsweise aus einem radioaktiven Nickel-Isotop, nämlich $Ni^{63}$. Da die Auskleidung 23 elektrisch leitfähig ist, kann sie zugleich als Außenelektrode dienen, d.h. als Elektrode, die die als Innenelektrode wirkende Stabeleketrode 21 zylindrisch umgibt. Die Auskleidung 23 ist hierzu mit einer zweiten Zuleitung 24 verbunden, die durch den zylindrischen Mantel 11 hindurchgeführt ist und deren Funktion weiter unten noch ausführlich erläutert werden wird.

Bei einem praktischen Ausführungsbeispiel der Meßkammer 10 hat diese einen Innendurchmesser von 10 mm und eine axiale Länge von 10 bis 30 mm. Bei Messungen an gasförmigen Substanzen ist die Saugpumpe 18 dabei auf einen Gasdurchfluß von 10 bis 30 l/h eingestellt. Das Gas strömt dann durch den Einlaßstutzen 14 in die Meßkammer 10, wie mit Pfeilen 26 angedeutet und wird aus der Meßkammer 10 durch den Auslaßstutzen 16 abgesaugt, wie mit Pfeilen 27 angedeutet.

Bei der vorstehend genannten Geometrie der Meßkammer 10 hat die Auskleidung 23 z.B. eine Aktivität von 10 mCi.

Wenn über die Zuleitungen 22, 24 eine Spannung an die Elektroden 21, 23 gelegt wird, so bildet sich ein radial gerichtetes elektrisches Feld aus, das in Fig. 1 durch mit E bezeichnete Pfeile angedeutet ist.

Fig. 2 zeigt in der linken Hälfte nochmals die Meßkammer 10 in deutlich schematisierter Schnittansicht.

In Fig. 2 ist ferner mit 30 die von der radioaktiven Auskleidung 23 ausgehende β-Strahlung angedeutet. Bei 31 ist strichpunktiert ein radialer Verlauf der Intensität der β-Strahlung 30 angedeutet, um zu zeigen, daß die β-Strahlung 30 bereits nach wenigen Millimetern, jedenfalls auf eine Strecke, die wesentlich kleiner als der Radius der Meßkammer 10 ist, bereits stark abgesunken ist.

Auf diese Weise bildet sich in einer Radialebene der Meßkammer 10 eine inhomogene Verteilung der Strahlungsintensität, weil diese vom Innenumfang der Meßkammer 10, d.h. von der radio-aktiven Auskleidung 23 nach innen zur Achse 20 hin schnell abnimmt.

Wenn nun ein in Fig. 2 mit 32 angedeutetes Gasgemisch durch den Einlaßstutzen 14 in die Meßkammer 10 eingesaugt wird, so geschieht bei entsprechender Zusammensetzung des Gasgemisches 32 folgendes:

Es sei angenommen, daß das Gasgemisch 32 im wesentlichen aus Umgebungsluft besteht, die jedoch gewisse Anteile von zwei Meßsubstanzen A und B enthält. Diese Meßsubstanzen A und B können z.B. gasförmige Kampfstoffe sein, insbesondere kann die Meßsubstanz A ein Hautgift und die Meßsubstanz B ein Nervengift sein.

Die in der Umgebungsluft vorhandene Feuchtigkeit (Wasser) wird nun in der Meßkammer 10 der β-Strahlung 30 ausgesetzt. Die β-Strahlung 30 wirkt ionisierend, so daß sich aus der als Reaktionssubstanz verwendeten Luftfeuchtigkeit Reaktionsionen bilden, nämlich negativ geladene Sauerstoffionen ($O_2$-) einerseits und positiv geladene Protonen ($H^+$) andererseits, wie dies in Fig. 2 schematisch dargestellt ist.

Es sei nun weiter angenommen, daß die Moleküle $M_A$ der ersten Meßsubstanz (gasförmige Hautgifte) eine Affinität für die negativ geladenen Sauerstoffionen ($O_2$-) aufweist, während die Moleküle $M_B$ der zweiten Meßsubstanz (gasförmige Nervengifte) eine Affinität zu den positiv geladenen Reaktionsionen ($H^+$) besitzen. Die entsprechenden Reaktionsionen lagern sich daher an den zugehörigen Molekülen an, so daß elektrisch geladene Quasi-Molekulionen $M_A^-$ bzw. $M_B^+$ entstehen.

Dabei muß zum einen beachtet werden, daß die Anzahl der durch Ionisation erzeugten Reaktionsionen sehr viel größer ist als die Anzahl der in der Umgebungssubstanz vorhandenen Meßsubstanzionen, so daß auch nach erfolgter Anlagerung der Reaktionsionen immer noch ein starker Überschuß an nicht-angelagerten Reaktionsionen besteht.

Zum anderen muß berücksichtigt werden, daß das Gewicht der Reaktionsionen wesentlich kleiner, nämlich etwa zwei- bis fünfmal kleiner als das Molekulargewicht der Meßsubstanzionen ist.

Nach erfolgter Ionisation und Anlagerung befinden sich in der Meßkammer 10 daher leicht bewegliche Reaktionsionen $O_2$- und $H^+$ sowie schwer bewegliche Quasi-Molekülionen $M_A^-$ und $M_B^+$. Die Konzentrationen dieser diversen Ladungsträger sind jedoch zunächst nicht bekannt.

Zum Erzeugen des elektrischen Feldes E innerhalb der Meßkammer 10 dient nun eine Spannungsquelle 40, die mit drei Kanälen versehen ist. Die Spannungsquelle 40 liegt in Reihe mit einem Meßwiderstand 41 und einer dritten Leitung 42 an den bereits erwähnten Zuleitungen 22 und 24, so daß insgesamt ein geschlossener Stromkreis besteht. Wenn die Spannungsquelle 40 nämlich eine Spannung an die Elektroden 21, 23 legt, so geraten die in der Meßkammer befindlichen Ladungsträger in Bewegung und es fließt ein Ionenstrom, der sich am Meßwiderstand 41 als Spannungsabfall bemerkbar macht.

Zur Steuerung der Messung ist ein Steuergerät 50 vorgesehen, das mit einer Meßleitung 51 an den Meßwiderstand 41 sowie mit drei Steuerleitungen 52, 53, 54 mit den drei Kanälen der Spannungsquelle 40 verbunden ist.

Der erste Kanal 60 der Spannungsquelle 40 ist dabei ein erster Impulsgenerator, der zweite Kanal 61 ein zweiter Impulsgenerator und der dritte Kanal 62 ein Gleichspannungsgenerator.

Über einen im Steuergerät 50 mit 63 angedeuteten Umschalter können nun wahlweise der erste, der zweite oder der dritte Kanal 60, 61, 62 in den Stromkreis geschaltet werden.

Es versteht sich in diesem Zusammenhang, daß die bereits geschilderten Schaltelemente ebenso wie die nachstehend noch zu erläuternden Schaltelemente jeweils als separate elektrische Bauelemente (Hardware) oder auch im Rahmen eines Steuerprogramms als Software ausgebildet sein können.

Das Steuergerät 50 steht schließlich noch mit einem Kennlinienspeicher 64 in Verbindung, der weiter unten noch erläutert werden wird.

In den als Impulsgenerator ausgebildeten Kanälen 60 bzw. 61 der Spannungsquelle 40 werden zeitvariante Spannungsverläufe erzeugt, die vorzugsweise die Form von periodischen Impulsfolgen haben. Beispielsweise kann, wie in Fig. 2 angedeutet, eine Impulsfolge um eine Nullinie 70 alternieren, wobei ein erster Impuls 71 ein positiver, schmaler und hoher Impuls ist, während ein zweiter Impuls 72 ein negativer, breiter und flacher Impuls ist. Vorzugsweise sind die Impulsflächen der Impulse 71 und 72 gleich groß.

Im zweiten Kanal 61 wird eine ähnliche Impulsfolge 71', 72' bezüglich der Nullinie 70 erzeugt, bei der die Form und Polarität der Impulse gegenüber den Impulsen 71, 72 einfach vertauscht ist.

Bei den Impulsen 71, 72 bzw. 71', 72' beträgt das Verhältnis von Höhe zu Breite vorzugsweise zwei bis fünf.

Im dritten Kanal 62 wird schließlich eine konstante Gleichspannung 73 erzeugt, deren Betrag um ein Vielfaches höher ist als der Effektivwert der Impulsefolgen 71, 72 oder 71', 72'. Vorzugsweise beträgt die Amplitude der Gleichspannung 73 das zwei- bis zwanzigfache des Effektivwertes der Impulsfolgen, so daß in der Meßkammer 10 bei Anliegen der Gleichspannung 73 an Elektroden 21, 23 eine elektrische Feldstärke von z.B. 1000 V/cm erzeugt wird.

Am Steuergerät 50 sind ein erster Meßausgang 80 für Messungen mit dem ersten Kanal 60 sowie ein zweiter Meßausgang 81 für Ergebnisse der Messungen mit dem zweiten Kanal 61 vorgesehen. Da beide Meßausgänge 80, 81 jeweils zwei Anschlüsse haben, stehen insgesamt vier Anschlüsse 82 bis 85 zur Verfügung. Zwei dieser Anschlüsse 82, 84 werden mit Invertern 86, 87 invertiert. Die auf diese Weise entstehenden vier Ausgangsleitungen sind in der in Fig. 2 ersichtlichen Weise auf vier UND-Gatter 90 bis 93 geführt, denen jeweils Anzeigen 94 bis 97 nachgeschaltet sind.

Die Anzeige 94 zeigt dabei die gleichzeitige Anwesenheit von Nervengiften (+) und Hautgiften (-) an, die zweite Anzeige 95 zeigt an, daß lediglich Hautgifte (-) nachgewiesen wurden, die dritte Anzeige 96 zeigt die Anwesenheit von lediglich Nervengiften (+) an, während die vierte Anzeige 97 signalisiert, daß weder Hautgifte noch Nervengifte nachgewiesen werden konnten.

Zur Erläuterung der Wirkungsweise der Anordnung gemäß Fig. 2 soll zunächst das Kennlinienfeld der Fig. 3 erklärt werden:

In Fig. 3 sind Eichkurven aufgezeichnet, die durch mathematische Modelle für eine bestimmte Geometrie einer Meßkammer 10 bei bestimmten Randbedingungen ermittelt wurden. Bei den Kennlinien der Fig. 3 ist auf der Ordinate der Quasi-Molekülionenstrom $\Delta I$ abgetragen, während auf der Abszisse der Effektivwert der an den Elektroden 21, 23 anliegenden Spannung abgetragen ist.

Mit B ist nun eine erste Kennlinie in Fig. 3 bezeichnet. Die Kennlinie B gilt für eine vorbestimmte vorhandene Konzentration der Meßsubstanz B (Nervengifte). Die Kennlinie B gibt den Quasi-Molekulionenstrom der Quasi-Molekülionen $M_B^+$ an, wenn an die Meßkammer 10 der erste Kanal 60 der Spannungsquelle 40 geschaltet, d.h. wenn ein Spannungsverlauf mit den Impulsen 71, 72 eingestellt wurde. Es zeigt sich, daß die Molekülionen $M_B^+$ der ersten Meßsubstanz B bei niedrigen effektiven Spannungen U zunächst nur einen kleinen Molekülionenstrom $\Delta I$ zur Folge haben, der dann zu einem Maximum ansteigt, bei weiterer Steigerung der effektiven Spannung auf Null absinkt und dann zu einem negativen Grenzwert hin verläuft.

In entsprechender Weise zeigt Fig. 3 mit B' den Verlauf des Molekülionenstromes unter denselben Verhältnissen, lediglich mit der Abweichung, daß nunmehr der zweite Kanal 61 der Spannungsquelle 40 eingeschaltet wurde. Unter diesen Bedingungen ist der Verlauf des Molekülionenstromes ΔI über der effektiven Spannung U ein anderer, der Molekülionenstrom ΔI bleibt nämlich konstant mit einem schwach ausgeprägten Maximum.

Schließlich zeigt A' eine dritte Kennlinie, in der die Abhängigkeit des Molekülionenstromes ΔI für die Molekülionen $M_A^-$ der ersten Meßsubstanz A (Hautgifte) über der effektiven Spannung U aufgetragen ist. Der Verlauf der Kurve A' ist ähnlich dem Verlauf der Kurve B, allerdings mit jeweils umgekehrten Vorzeichen. Interessant ist, daß sich die Kurven B und A' näherungsweise im Nullpunkt 100 schneiden.

Die Kurven B, B' und A', die, wie erwähnt, durch theoretische oder praktische Vorversuche ermittelt wurden, werden bei der Vorrichtung der Fig. 2 im Kennlinienspeicher 64 abgelegt und beeinflussen die Wirkungsweise des Steuergerätes 50.

An dieser Stelle darf nochmals darauf hingewiesen werden, daß sich das Diagramm der Fig. 3 lediglich auf eine bestimmte Konfiguration der Meßkammer 10 bezieht, also auf eine vorbestimmte Geometrie sowie vorbestimmte Meßparameter, beispielweise auch eine vorbestimmte Frequenz der Impulse 71, 72 bzw. 71' bzw. 72'. Es versteht sich dabei, daß eine Vielzahl von Kennlinienfeldern nach Art der Fig. 3 für unterschiedliche Meßkammern oder Meßbedingungen ermittelt und jeweils im Kennlinienspeicher 64 für unterschiedliche praktische Messungen abgespeichert werden können.

Wir betrachten nun den Fall, daß in der Anordnung der Fig. 2 alle Meßparameter eingestellt wurden, die z.B. dem Diagramm der Fig. 3 zugrunde lagen.

Man kann nun innerhalb der Variationsbreite des Diagramms der Fig. 3 die effektive Spannung der Impulse 71, 72 bzw. 71', 72' frei wählen. Zweckmäßigerweise wird man eine Messung am Nullpunkt 100 durchführen, also bei dem in Fig. 3 dargestellten Beispielsfall die Impulse 71, 72 bzw. 71', 72' so einstellen, daß die effektive Spannung in der Größenordnung von 110 V liegt.

Wenn nun durch Betätigen des Umschalters 63 der erste Kanal 60 der Spannungsquelle 40 in den Stromkreis der Meßkammer 10 geschaltet wird, so wird ein evtl. Molekülionenstrom ΔI am Meßwiderstand 41 eine Spannung erzeugen, die über die Meßleitung 51 zum Steuergerät 50 übertragen wird.

Wenn bei diesem Versuch kein Meßsignal festgestellt wird, so bedeutet dies, daß keine Molekülionen $M_A^-$ vorhanden sind (diese hätten in diesem Arbeitspunkt einen Molekülionenstrom zur Folge gehabt), das Ergebnis bedeutet jedoch noch nicht, daß auch keine Molekülionen $M_B^+$ vorhanden sind, weil die Kurve B im Nullpunkt 100 angibt, daß auch bei Vorhandensein von $M_B^+$ Molekülionen kein Quasi-Molekülionenstrom ΔI erzeugt würde.

Wenn bei der Messung hingegen ein Meßsignal anfällt, so bedeutet dies, daß $M_A^-$ Quasi-Molekülionen vorhanden sein müssen, eine Aussage über das Vorhandensein von $M_B^+$ Quasi-Molekülionen ist jedoch wiederum nicht möglich, weil im Nullpunkt 100 systematisch kein Quasi-Molekülionenstrom durch $M_B^+$ Quasi-Molekülionen auftreten kann.

Mit diesem Zwischenergebnis wird auf den zweiten Kanal 61 umgeschaltet, um unmittelbar nachfolgend eine Messung mit den Impulsen 71', 72' durchzuführen. Meßpunkt ist wiederum der Nullpunkt 100.

Ergibt sich nun bei dieser zweiten Messung wiederum kein Meßsignal, so bedeutet dies (isoliert gesehen), daß keine $M_B^+$ Quasi-Molekülionen vorhanden sein können, weil diese ausweislich der Kurve B' in Fig. 3 bei 110 Volt Effektivspannung einen Molekülionenstrom hätten hervorrufen müssen.

Andererseits bedeutet die Abwesenheit des Meßsignals in diesem Fall isoliert noch nicht, daß auch keine $M_A^-$ Molekülionen vorhanden sind, weil auch hier systematisch im Nullpunkt 100 kein Meßsignal von $M_A^-$ Quasi-Molekülionen erzeugt werden kann.

Wenn andererseits die zweite Messung ein positives Meßsignal ergibt, so bedeutet dies, daß mindestens $M_B^+$ Quasi-Molekülionen vorhanden sind, während andererseits wiederum eine Aussage über $M_A^-$ Quasi-Molekülionen nicht gemacht werden kann.

An den Ausgängen 82 bis 85 des Steuergerätes 50 sind nun diese vier möglichen Ergebnisse abzugreifen. Am Ausgang 82 liegt im Falle der ersten Messung mit dem ersten Kanal 60 das Nullsignal (kein Meßstrom) an, während im Ausgang 63 ein positives Meßsignal (Meßstrom vorhanden) anliegen würde. Entsprechendes gilt für die Ausgänge 84 und 85 bei Messungen mit dem zweiten Kanal 61.

Über die logischen Elemente 86, 87, 90 bis 93 werden nun die vier möglichen Ausgangssignale beider Messungen miteinander verknüpft, um die vier möglichen Ergebnisse anzuzeigen.

Wenn beispielsweise weder $M_A^-$ Quasi-Molekülionen noch $M_B^+$ Quasi-Molekülionen vorhanden sind, wird bei beiden Messungen mit den Kanälen 60, 61 jeweils kein Meßsignal anfallen. Dieses Nullsignal liegt in der Darstellung der Fig. 2 an den Ausgängen 82 und 84 an, wird in den Invertern 86, 87 in positive Signale umgeformt und gelangt als solche auf die beiden Eingänge des UND-Gatters 93, so daß die Anzeige 97 aufleuchtet, die somit anzeigt, daß keine der beiden Meßsubstanzen A oder B im Gasgemisch 32 vorhanden war.

Wenn hingegen beide Meßsubstanzen A und B im Gasgemisch 32 vorhanden waren, so wird bei beiden Messungen jeweils ein positives Meßsignal erzeugt werden, die damit als positiv logische Signale an den Ausgängen 83 und 85 anliegen. Demzufolge wird das UND-Gatter 90 durchschalten und die zugehörige Anzeige 94 betätigen. Entsprechendes gilt für die beiden weiteren Anzeigen für isoliertes Auftreten der ersten Meßsubstanz A (Anzeige 95) oder der Meßsubstanz B (Anzeige 96).

Es versteht sich dabei, daß die in Fig. 2 dargestellte Logik lediglich der Anschaulichkeit halber verhältnismäßig aufwendig gestaltet wurde und daß im konkreten Anwendungsfall auch andere logische Elemente und Verknüpfungen eingesetzt werden können.

Es versteht sich ferner, daß die Messungen nicht unbedingt im Nullpunkt 100 durchgeführt werden müssen. Es können auch andere Meßpunkte gewählt werden, solange nicht eine unerwünschte Kompensation durch betragsgleiche aber vorzeichenverschiedene Werte der Eichkurven eintritt. Ein solcher "verbotener" Arbeitspunkt ist in Fig. 3 mit 101 eingetragen.

In einem dritten Schritt oder einem dem ersten Schritt vorausgehenden Schritt kann nun der dritte Kanal 62 der Spannungsquelle 40 eingeschaltet und damit die sehr hohe Gleichspannung 73 an die Elektroden 21, 23 gelegt werden.

Das Anlegen der sehr hohen Gleichspannung 73 mit einer sehr hohen statischen elektrischen Feldstärke von z.B. 1000 V/cm hat zur Folge, daß sämtliche in der Meßkammer 10 befindlichen Ladungsträger, also die beweglichen Reaktionsionen $O_2^-$ und $H^+$ ebenso wie die verhaltnismäßig trägen Quasi-Molekülionen $M_A^-$ und $M_B^+$ zur jeweiligen Elektrode wandern und sich damit ein Gesamt-Ionenstrom einstellt, der der Gesamtzahl der freien Ladungsträger in der Meßkammer 10 entspricht.

Dieses Meßergebnis, in Verbindung mit den beiden vorausgegangenen Messungen über die Kanäle 60 und 61 gestattet nun, zum einen quantitative Messungen vorzunehmen und damit Konzentrationen der Meßsubstanzen A und B zu bestimmen, andererseits können aber auch Konzentrationen von Störsubstanzen ermittelt und damit herausgerechnet werden und schließlich hebt sich auch die Wirkung von äußeren Störeinflüssen, beispielsweise von Schwankungen der Temperatur, des Drucks und der Feuchtigkeit heraus.

Letzteres gilt deswegen, weil die drei Messungen mit den Kanälen 60, 61, 62 in zeitlich unmittelbarer Folge, beispielsweise im Takt von 100 ms vorgenommen werden, so daß alle drei Messungen bei den selben ggf. gestörten Meßbedingungen durchgeführt werden und sich diese Störgrößen durch Vergleich der Messungen herausheben.

Was nun die Bestimmung der Konzentration der Meßsubstanzen A, B sowie evtl. vorhandener Störsubstanzen angeht, so muß berücksichtigt werden, daß bei den beiden ersten Messungen mit den Kanälen 60 und 61 das Ergebnis jeweils eine Funktion der (bekannten) Anlagerungswahrscheinlichkeit, der (unbekannten) Konzentration der Moleküle der Meßsubstanzen A und B, der (unbekannten) Konzentration der Moleküle der Störsubstanz sowie der (ebenfalls unbekannten) Konzentration der Reaktionsionen ist.

Wenn nun mittels der dritten (oder vorausgehenden) Messung die Gesamtzahl der Ladungsträger festgestellt wurde und andererseits über eine Verhältnisbildung der ersten und der zweiten Messung das Verhältnis der Konzentrationen der Moleküle der Meßsubstanzen bekannt ist, so können die verbleibenden unbekannten Größen auf diese Weise rechnerisch oder durch entsprechende Rechenschaltungen ermittelt werden.

Eine solche Berechnung kann beispielsweise folgendermaßen durchgeführt werden:

Man betrachtet zunächst die Gleichungen für die Produkt-Ionen-Bildung wie folgt:

$$(H_2O)_nH^+ + (A) \xrightarrow{X} (A)H^+ + nH_2O$$

$$(H_2O)_mO_2^- + (B) \xrightarrow{Y} (B)O_2^- + mH_2O$$

Worin $H_2O$ den Wassercluster-Beitrag in den Reaktionsionen aus der Luftfeuchtigkeit der Umgebungsluft $H^+$ sowie $O_2^-$ die Reaktionsionen bezeichnen und mit A bzw. B wiederum die Meßsubstanzen bezeichnet sind, an die sich die positiven Reaktionsionen $H^+$ bzw. die negativen Reaktionsionen $O_2^-$ anlagern. Im oben erläuterten Beispielsfall bezeichnet A somit wieder die Gruppe der Nervengifte und B die Gruppe der Hautgifte.

Mit X und Y sind die Bildungswahrscheinlichkeiten bezeichnet, die bei der Ionisierung der Meßsubstanzen A bzw. B zu berücksichtigen sind. Die Bildungswahrscheinlichkeiten X, Y könnten mit Hilfe der Ionen-Mobilitäts-Spektroskopie (IMS) bestimmt werden, sofern ideale Bedingungen vorliegen. Hierzu ist jedoch ein teurer und komplizierter Aufbau erforderlich.

Betrachten wir nun die drei verschiedenen Messungen der oben ausführlich beschriebenen Art, nämlich

die Nullpunktmessung mit hoher Spannung sowie die beiden Impulsmessungen, so werden bei jeder der drei Messungen die Bildungswahrscheinlichkeiten X und Y unterschiedlich stark reduziert. Dies ist nachfolgend durch Indices $X_1$, $X_2$, $X_3$ bzw. $Y_1$, $Y_2$, $Y_3$ berücksichtigt. Die jeweiligen Faktoren der Reduzierung $X_1/X$, $X_2/X$, $X_3/X$ bzw. $Y_1/Y$, $Y_2/Y$, $Y_3/Y$ können erfindungsgemäß mit der Ionen-Mobilitäts-Spektroskopie bestimmt werden, bei der die Ionenquelle zugleich die Meßzelle der Vorrichtung ist.

Weiterhin ist nachfolgend mit einer Konstante K die Zahl der nicht-angelagerten Restionen bezeichnet, wobei K vom Druck, der Temperatur, der Driftgeschwindigkeit, der Halbwertszeit und dgl., also allgemeinen Meßbedingungen, abhängt.

Betrachten wir nun zunächst als erste Messung die Nullpunktsmessung mit hoher Gleichspannung, so finden wir für den sich einstellenden Ionenstrom $I_1$:

$$I_1 = K + X_1A + Y_1B$$

Berücksichtigen wir nun, daß $X_1$ und $Y_1$ in diesem Fall näherungsweise Null sind, weil die Reaktionsionen gegenüber der Quasi-Molekülionen eine sehr hohe Geschwindigkeit haben, so finden wir für den Ionenstrom bei dieser Messung näherungsweise:

$$I_1 \approx K$$

Betrachten wir nun den zweiten Fall der Ionisierung der ersten, Meßsubstanz A, so finden wir für den sich einstellenden Ionenstrom $I_2$ :

$$I_2 = K + X_2A + Y_2B$$

wobei berücksichtigt ist, daß in diesem Falle $X_2$ sehr viel größer als $Y_2$ ist.

Für den dritten Meßfall der Ionisierung der Meßsubstanz B finden wir für den sich einstellenden Ionenstrom $I_3$ :

$$I_3 = K + X_3A + Y_3B$$

wobei in diesem Fall $X_3$ sehr viel kleiner als $Y_3$ ist.

Aus diesen drei Meßergebnissen können wir somit die Konzentration der Meßsubstanz A mit

$$A = (I_2 - I_1 - Y_2A)/X_2 = (I_3 - I_1 - Y_3B)/X_3$$

und die Konzentration der Meßsubstanz B mit

$$B = (\frac{X_2}{X_3}(I_3 - I_1) - (I_2 - I_1))/(\frac{X_2}{X_3} Y_3 - Y_2)$$

bestimmen.

## Patentansprüche

1. Verfahren zum Nachweisen von Meßsubstanzen (A, B) in einer Umgebungssubstanz, insbesondere zum Nachweisen gasförmiger Kampfstoffe in Umgebungsluft, bei dem zunächst aus einer Reaktionssubstanz (Umgebungsluft, $H_2O$) leichte Reaktionsionen ($O_2^-$, $H^+$ mit $H_2O$-Clustern) erzeugt und diese dem Gemisch (32) aus Meßsubstanz (A, B) und Umgebungssubstanz zugefügt werden, derart, daß sich Reaktionsionen ($O_2^-$, $H^+$ mit $H_2O$-Clustern) in einer Meßkammer (10) in räumlich inhomogener Verteilung an schwere Moleküle ($M_A$, $M_B$) der Meßsubstanz (A, B) zur Bildung von Quasi-Molekülionen ($M_A^-$, $M_B^+$) anlagern, daß in der Meßkammer (10) ein zeitvariantes und um eine Nullinie (70) alternierendes elektrisches Feld (E) einer vorbestimmten Grundfrequenz und Amplitude erzeugt, der sich infolge des elektrischen Feldes (E) einstellende Quasi-Molekülionenstrom ( $\Delta I$) gemessen und das Meßsignal ausgewertet wird, dadurch gekennzeichnet, daß zum Unterscheiden einer ersten Meßsubstanz (A) von einer gleichzeitig in der Umgebungssubstanz anwesenden zweiten Meßsubstanz (B)
   - zunächst für eine definierte Meßkammer (10) die Abhängigkeit des Quasi-Molekülionenstromes ($\Delta$ I) von der Grundfrequenz, der Amplitude sowie einer Asymmetrie des zeitlichen Verlaufes der elektrischen Feldstärke (E) zur Nullinie (70) jeweils isoliert für die erste (A) sowie für die zweite (B) Meßsubstanz bestimmt wird,
   - alsdann eine erste Messung des Gemisches (32) bei einer ersten Asymmetrie ausgeführt,
   - nachfolgend eine zweite Messung des Gemisches (32) bei einer zweiten Asymmetrie ausgeführt wird, und
   - die Meßsignale beider Messungen logisch verknüpft werden.

2. Verfahren nach Anspruch 1, dadurch gekennzeichnet, daß als Reaktionssubstanz Wasser ($H_2O$) verwendet wird.

3. Verfahren nach Anspruch 1 oder 2, dadurch gekennzeichnet, daß die Reaktionsionen ($O_2^-$, $H^+$ mit $H_2O$-

Clustern) mittels radioaktiver Bestrahlung (β) erzeugt werden.

4. Verfahren nach Anspruch 3, dadurch gekennzeichnet, daß zum Erzeugen der inhomogenen Verteilung ein β-Strahler (23) in der Meßkammer (10) angeordnet wird, deren Innenabmessungen wesentlich größer als die Halbwerts-Reichweite des β-Strahlers (23) eingestellt werden.

5. Verfahren nach einem oder mehreren der Ansprüche 1 bis 4, dadurch gekennzeichnet, daß das elektrische Feld (E) mittels einer vorzugsweise Periodischen Spannung erzeugt wird.

6. Verfahren nach Anspruch 5, dadurch gekennzeichnet, daß die Spannung mit einem zeitlichen Verlauf mit einander abwechselnden ersten und zweiten Impulsen (71, 72) oberhalb bzw. unterhalb der Nullinie (70) eingestellt wird.

7. Verfahren nach Anspruch 6, dadurch gekennzeichnet, daß die ersten Impulse (71) zeitlich unmittelbar an die zweiten Impulse (72) angeschlossen werden.

8. Verfahren nach Anspruch 5 oder 6, dadurch gekennzeichnet, daß die ersten Impulse (71) mit der gleichen Impulsfläche wie die zweiten Impulse (72) eingestellt werden.

9. Verfahren nach einem oder mehreren der Ansprüche 6 bis 8, dadurch gekennzeichnet, daß die Impulse (71, 72) rechteckförmig eingestellt werden, wobei die ersten Impulse (71) höher und schmaler als die zweiten Impulse (72) sind.

10. Verfahren nach Anspruch 8 und 9, dadurch gekennzeichnet, daß die ersten Impulse (71) zwei- bis fünfmal so hoch wie die zweiten Impulse (72) eingestellt werden.

11. Verfahren nach einem oder mehreren der Ansprüche 6 bis 10, dadurch gekennzeichnet, daß die erste und die zweite Asymmetrie dadurch eingestellt werden, daß für die erste Messung die Impulse (71, 72) mit einer ersten Polarität und/oder Folge und für die zweite Messung die Impulse (71', 72') mit entgegengesetzter Polarität und/oder Folge versehen werden.

12. Verfahren nach einem oder mehreren der Ansprüche 1 bis 11, dadurch gekennzeichnet, daß die Grundfrequenz im Bereich zwischen 100 und 500 Hz eingestellt wird.

13. Verfahren nach einem oder mehreren der Ansprüche 1 bis 12, dadurch gekennzeichnet, daß das Volumen der Meßkammer (10) im Bereich zwischen 0,5 und 5 $cm^3$ eingestellt wird.

14. Verfahren nach einem oder mehreren der Ansprüche 5 bis 13, dadurch gekennzeichnet, daß die Spannung mit einem Effektivwert im Bereich von 50 bis 200 V eingestellt wird.

15. Verfahren nach einem oder mehreren der Ansprüche 1 bis 13, dadurch gekennzeichnet, daß in einem weiteren Verfahrensschritt ein konstantes elektrisches Feld mit zwei- bis zwanzigfacher Stärke, verglichen mit dem Effektivwert des alternierenden elektrischen Feldes (E), in der Meßkammer (10) erzeugt, der sich einstellende Quasi-Molekülionenstrom ( ΔI) gemessen und das dabei erhaltene Meßsignal mit den Meßsignalen der ersten und zweiten Messung verglichen wird.

16. Verfahren nach Anspruch 15, dadurch gekennzeichnet, daß das konstante elektrische Feld mit einer Feldstärke von etwa 100 V/cm eingestellt wird.

17. Vorrichtung zum Nachweisen von Meßsubstanzen (A, B) in einer Umgebungssubstanz, insbesondere zum Nachweisen gasförmiger Kampfstoffe in Umgebungsluft, mit einer Meßkammer (10), mit ersten Mitteln (14) zum Einleiten des Gemisches (32) aus Meßsubstanz (A, B) und Umgebungssubstanz in die Meßkammer (10), mit zweiten Mitteln (23) zum Erzeugen von leichten Reaktionsionen ($OH^-$, $H^+$ mit $H_2O$-Clustern) aus einer Reaktionssubstanz ($H_2O$) und zum Zufügen der Reaktionsionen ($O_2^-$, $H^+$ mit $H_2O$-Clustern) zu dem Gemisch (32), mit dritten Mitteln zum Anlagern der Reaktionsionen ($O_2^-$, $H^+$ mit $H_2O$-Clustern) an schwere Moleküle ($M_A$, $M_B$) der Meßsubstanz (A, B) in der Meßkammer (10), mit vierten Mitteln (21, 23, 40, 50) zum Erzeugen eines um eine Nullinie alternierenden elektrischen Feldes (E) einer vorbestimmten Grundfrequenz und Amplitude in der Meßkammer (10), wobei die vierten Mittel als Elektrodenpaar (21, 23) in der Meßkammer (10) sowie als mit dem Elektrodenpaar (21, 23) verbundene Spannungsquelle (40) ausgebildet sind, und mit fünften Mitteln (41, 50) zum Erfassen und Auswerten des von dem elektrischen Feld (E) in der Meßkammer (10) verursachten Quasi-Molekülionenstroms ( $\Delta I$), dadurch gekennzeichnet, daß die genannten fünften Mittel (50) einen Umschalter (63) umfassen, der so angeordnet ist, daß über die Spannungsquelle (40) zwei zur Nullinie (70) unterschiedlich asymmetrische Spannungsverläufe alternativ und nacheinander an das Elektrodenpaar (21, 23) schaltbar sind, und daß die fünften Mittel (41, 50) logische Schaltmittel (90-93) zum Vergleich der gemessenen Molekülionenstrom-Werte umfassen.

**18.** Vorrichtung nach Anspruch 17, dadurch gekennzeichnet, daß die Meßkammer (10) zylindrisch ist.

**19.** Vorrichtung nach Anspruch 17 oder 18, dadurch gekennzeichnet, daß die Meßkammer mit einem radioaktiven Material (23) ausgekleidet ist.

**20.** Vorrichtung nach einem oder mehreren der Ansprüche 17 bis 19, dadurch gekennzeichnet, daß die Wandung (11, 12, 13) der Meßkammer (10) aus einem Kunststoff besteht.

**21.** Vorrichtung nach einem oder mehreren der Ansprüche 18 bis 20, dadurch gekennzeichnet, daß das Elektrodenpaar durch eine axiale Stabelektrode (21) sowie durch eine elektrisch leitende Auskleidung (23) des Zylindermantels (11) der Meßkammer (10) gebildet wird.

**22.** Vorrichtung nach Anspruch 21, dadurch gekennzeichnet, daß die Stabelektrode (21) eine Oberfläche aus Edelstahl aufweist.

## Claims

**1.** Process for detecting measured substances (A, B) in an ambient substance, especially for detecting gaseous warfare agents in ambient air, in which light reaction ions ($O_2$-, H+ with $H_2O$ clusters) are first generated from a reaction substance (ambient air, $H_2O$) and are added to the mixture (32) of measured substance (A, B) and ambient substance, in such a way that reaction ions ($O_2$-, $H^+$ with $H_2O$ clusters) in a spatially inhomogeneous distribution in a measurement chamber (10) attach themselves to heavy molecules ($M_A$, $M_B$) of the measured substance (A, B) to form quasi-molecular ions ($M_A$-, $M_B$+); and that in the measurement chamber (10), an electric field (E) that varies over time, alternates about a zero line (70), and has a predefined basic frequency and amplitude, is generated, the quasi-molecular ion current ($\Delta I$) resulting from the electric field (E) is measured, and the measured signal is analyzed, wherein, in order to differentiate a first measured substance (A) from a second measured substance (B) present simultaneously in the ambient substance,

- First, for a defined measurement chamber (10), the function of the quasi-molecular ion current ($\Delta I$) vs. basic frequency, vs. amplitude, and vs. an asymmetry of the electric field strength (E) vs. time function with respect to the zero line (70) are determined, each time separately for the first (A) and for the second (B) measured substance;
- Then a first measurement of the mixture (32) is performed with a first asymmetry;
- Then a second measurement of the mixture (32) is performed with a second asymmetry; and
- The measured signals of the two measurements are logically correlated.

**2.** Process according to Claim 1, wherein water ($H_2O$) is used as a reaction substance.

**3.** Process according to Claim 1 or 2, wherein the reaction ions ($O_2$-, $H^+$ with $H_2O$ clusters) are generated by means of radiactive irradiation (β).

**4.** Process according to Claim 3, wherein in order to generate the inhomogeneous distribution, a β radiator (23) is arranged in the measurement chamber (10), whose inside dimensions are made to be considerably greater than the half-life range of the β radiator (23).

**5.** Process according to one or more of Claims 1 to 4, wherein the electric field (E) is generated by means of a preferably periodic voltage.

6. Process according to Claim 5, wherein the voltage is given a profile over time having first and second pulses (71, 72) alternating from one to another above and below the zero line (70).

7. Process according to Claim 6, wherein the first pulses (71) are followed immediately in time by the second pulses (72).

8. Process according to Claim 5 or 6, wherein the first pulses (71) are made to have the same pulse area as the second pulses (72).

9. Process according to one or more of Claims 6 to 8, wherein the pulses (71, 72) are made to be rectangular in shape, with the first pulses (71) being higher and narrower than the second pulses (72).

10. Process according to Claims 8 and 9, wherein the first pulses (71) are made to be two to five times as high as the second pulses (72).

11. Process according to one or more of Claims 6 to 10, wherein the first and the second asymmetry are produced by the fact that for the first measurement the pulses (71, 72) are given a first polarity and/or sequence, and for the second measurement the pulses (71'. 72') are given the opposite polarity and/or sequence.

12. Process according to one or more of Claims 1 to 11, wherein the basic frequency is set in the range between 100 and 500 Hz.

13. Process according to one or more of Claims 1 to 12, wherein the volume of the measurement chamber (10) is set in the range between 0.5 and 5 $cm^3$.

14. Process according to one or more of Claims 5 to 13, wherein the voltage is set with an effective value in the range between 50 and 200 V.

15. Process according to one or more of Claims 1 to 13, wherein in a further process step, a constant electric field two to twenty times as strong as the effective value of the alternating electric field (E) is generated in the measurement chamber (10); the resulting quasi-molecular ion current ($\Delta I$) is measured; and the measured signal obtained thereby is compared with the measured signals of the first and second measurements.

16. Process according to Claim 15, wherein the constant electric field is set with a field strength of approximately 100 V/cm.

17. Device for detecting measured substances (A, B) in an ambient substance, especially for detecting gaseous warfare agents in ambient air, with a measurement chamber (10), with first means (14) for introducing the mixture (32) of measured substance (A, B) and ambient substance into the measurement chamber (10); with second means (23) for generating light reaction ions ($OH^-$, $H^+$ with $H_2O$ clusters) from a reaction substance ($H_2O$) and for adding the reaction ions ($O_2$-, $H^+$ with $H_2O$ clusters) to the mixture (32); with third means for attaching the reaction ions ($O_2$-, $H^+$ with $H_2O$ clusters) to heavy molecules ($M_A$, $M_B$) of the measured substance (A, B) in the measurement chamber (10); with fourth means (21, 23, 40, 50) for generating in the measurement chamber (10) an electric field (E) which alternates about a zero line and has a predefined basic frequency and amplitude, with the fourth means being configured as an electrode pair (21, 23) in the measurement chamber (10) and as a voltage source (40) connected to the electrode pair (21, 23); and with fifth means (41, 50) for detecting and analyzing the quasi-molecular ion current ( $\Delta I$) caused by the electric field (E) in the measurement chamber (10), wherein the voltage source (40) comprises a changeover switch (63) by means of which two voltage profiles with different asymmetries with respect to the zero line (70) can be switched alternatively and successively to the electrode pair (21, 23); and wherein the fifth means (41, 50) comprise logi cal circuit means for comparing the measured values of the quasi-molecular ion current values.

18. Device according to Claim 17, wherein the measurement chamber (10) is cylindrical in shape.

19. Device according to Claim 17 or 18, wherein the measurement chamber is lined with a radioactive material

(23).

**20.** Device according to one or more of Claims 17 to 19, wherein the walls (11, 12, 13) of the measurement chamber (10) are made of a plastic.

**21.** Device according to one or more of Claims 18 to 20, wherein the electrode pair consists of an axial rod electrode (21) and an electrically conductive lining (23) of the cylindrical enveloping surface (11) of the measurement chamber (10).

**22.** Device according to Claim 21, wherein the rod electrode (21) has a stainless-steel surface.

## Revendications

**1.** Procédé pour détecter des substances (A, B) dans une substance ambiante, en particulier pour détecter dans l'air ambiant des agents de combat chimiques sous forme gazeuse, procédé dans lequel, au moyen d'une substance réactive (air atmosphérique, $H_2O$), des ions de réaction légers ($O_2^-$, $H^+$ avec agglomérat de molécules d'eau) sont tout d'abord produits puis ajoutés au mélange (32) constitué par la substance à mesurer (A, B) et la substance ambiante, de telle sorte que, dans une chambre de mesure (10), des ions de réaction ($O_2^-$, $H^+$ avec agglomérat de molécules d'eau) se fixent sur les molécules lourdes ($M_A$, $M_B$) de la substance à mesurer (A, B), selon une répartition spatiale non homogène, en formant des ions quasi-moléculaires ($M_A^-$, $M_B^+$) et dans lequel un champ électrique (E) variable dans le temps et alternatif par rapport à un niveau de référence (70), et ayant une fréquence de base et une amplitude prédéterminées, est créé dans la chambre de mesure (10) pour permettre de mesurer le flux d'ions quasi-moléculaires ( $\Delta I$) produit par le champ électrique (E) et d'exploiter le signal de mesure, caractérisé en ce que, pour différencier une première substance à mesurer (A) d'une seconde substance à mesurer (B) simultanément présente dans la substance ambiante :

- en premier lieu, pour une chambre de mesure (10) donnée, la relation entre le flux d'ions quasi-moléculaires ($\Delta I$), la fréquence de base, l'amplitude et l'asymétrie de la variation en fonction du temps de l'intensité du champ électrique (E) par rapport au niveau de référence (70) est déterminée, et ce de façon distincte pour la première (A) et pour la seconde (B) des substances à mesurer,
- une première mesure du mélange (32) est alors effectuée avec une première asymétrie,
- puis une seconde mesure du mélange (32) est effectuée avec une seconde asymétrie, et
- une combinaison logique des signaux de mesure des deux mesures est alors effectuée.

**2.** Procédé selon la revendication 1, caractérisé en ce que la substance réactive utilisée est de l'eau ($H_2O$).

**3.** Procédé selon l'une ou l'autre des revendications 1 et 2, caractérisé en ce que les ions de réaction ($O_2^-$, $H^+$ avec agglomérat de molécules d'eau) sont obtenus par rayonnement radioactif ($\beta$).

**4.** Procédé selon la revendication 3, caractérisé en ce que, pour obtenir la distribution spatiale non homogène, une source de rayonnement $\beta$ (23) est disposée dans la chambre de mesure (10) dont les dimensions internes sont nettement supérieures à la demi-longueur d'onde de la source de rayonnement $\beta$ (23).

**5.** Procédé selon l'une quelconque des revendications 1 à 4, caractérisé en ce que le champ électrique (E) est créé au moyen d'une tension, de préférence périodique.

**6.** Procédé selon la revendication 5, caractérisé en ce que la tension est réglée en fonction du temps en alternant les premières et secondes impulsions (71, 72) au-dessus et en dessous du niveau de référence (70).

**7.** Procédé selon la revendication 6, caractérisé en ce que les premières impulsions (71) sont raccordées dans le temps directement aux secondes impulsions (72).

**8.** Procédé selon l'une ou l'autre des revendications 5 et 6, caractérisé en ce que les premières impulsions (71) sont réglées avec une surface d'impulsion dont l'aire est identique à celle des secondes impulsions (72).

**9.** Procédé selon l'une ou plusieurs des revendications 6 à 8, caractérisé en ce que les impulsions (71, 72) sont réglées avec une forme rectangulaire, les premières impulsions (71) étant plus hautes et plus étroites que les secondes impulsions (72).

**10.** Procédé selon l'une ou l'autre des revendications 8 et 9, caractérisé en ce que les premières impulsions (71) sont réglées de façon à être 2 à 5 fois plus hautes que les secondes impulsions (72).

**11.** Procédé selon l'une ou plusieurs des revendications 6 à 10, caractérisé en ce que les première et seconde asymétries sont réglées de telle sorte que, pour la première mesure, les impulsions (71, 72) soient d'une première polarité et/ou dans un premier ordre et, pour la seconde mesure, que les impulsions (71', 72') soient de polarité inverse et/ou dans l'ordre inverse.

**12.** Procédé selon l'une ou plusieurs des revendications 1 à 11, caractérisé en ce que la fréquence de base est comprise entre 100 et 500 Hz.

**13.** Procédé selon l'une ou plusieurs des revendications 1 à 12, caractérisé en ce que le volume de la chambre de mesure (10) est réglé dans la plage de 0,5 à 5 $cm^3$.

**14.** Procédé selon l'une ou plusieurs des revendications 5 à 13, caractérisé en ce que la tension est réglée avec une valeur efficace comprise dans la plage de 50 à 200 V.

**15.** Procédé selon l'une ou plusieurs des revendications 1 à 13, caractérisé en ce que, dans une autre étape de procédé, un champ électrique constant d'intensité 2 à 20 fois supérieure à la valeur efficace du champ électrique alternatif (E) est produit dans la chambre de mesure (10), le flux d'ions quasi-moléculaires induit ($\Delta I$) est mesuré et le signal de mesure correspondant est comparé aux signaux de mesure des première et seconde mesures.

**16.** Procédé selon la revendication 15, caractérisé en ce que le champ électrique constant est réglé avec une intensité de 100 V/cm environ.

**17.** Dispositif pour détecter des substances (A, B) dans une substance ambiante, en particulier pour détecter dans l'air ambiant des agents de combat chimiques sous forme gazeuse, comportant une chambre de mesure (10) dotée d'un premier moyen (14) pour introduire dans la chambre de mesure (10) le mélange (32) constitué par la substance à mesurer (A, B) et la substance ambiante, d'un deuxième moyen (23) pour produire des ions de réaction légers ($O_2^-$, $H^+$ avec agglomérat de molécules d'eau) à partir d'une substance réactive ($H_2O$) et pour ajouter au mélange (32) ces ions de réaction ($O_2^-$, $H^+$ avec agglomérat de molécules d'eau), d'un troisième moyen pour fixer les ions de réaction ($O_2^-$, $H^+$ avec agglomérat de molécules d'eau) sur les molécules lourdes ($M_A$, $M_B$) de la substance à mesurer (A, B) dans la chambre de mesure (10), d'un quatrième moyen (21, 23, 40, 50) pour créer dans la chambre de mesure (10) un champ électrique (E) alternatif par rapport à un niveau de référence et ayant une fréquence de base et une amplitude prédéterminées, ce quatrième moyen étant constitué par une paire d'électrodes (21, 23) prévues à l'intérieur de la chambre de mesure (10) ainsi que par une source de tension (40) reliée à la paire d'électrodes (21, 23) et d'un cinquième moyen (41, 50) pour détecter et mesurer le flux d'ions quasi-moléculaires ( $\Delta I$) produit par le champ électrique (E) dans la chambre de mesure (10), caractérisé en ce que ledit cinquième moyen (50) comporte un commutateur (63) constitué de telle sorte que, à partir de la source de tension (40), deux caractéristiques de tension ayant une asymétrie différente par rapport au niveau de référence (70) peuvent être appliquées à la paire d'électrodes (21, 23), alternativement et successivement, et en ce que le cinquième moyen (41, 50) comprend un commutateur logique (90 à 93) permettant de comparer les valeurs de flux d'ions moléculaires mesurées.

**18.** Dispositif selon la revendication 17, caractérisé en ce que la chambre de mesure (10) est de forme cylindrique.

**19.** Dispositif selon l'une ou l'autre des revendication 17 et 18, caractérisé en ce que la chambre de mesure est revêtue d'un matériau radioactif (23).

**20.** Dispositif selon l'une ou plusieurs des revendications 17 à 19, caractérisé en ce que la paroi (11, 12, 13) de la chambre de mesure (10) est en matière plastique.

**21.** Dispositif selon l'une ou plusieurs des revendications 18 à 20, caractérisé en ce que la paire d'électrodes est constituée par une électrode axiale (21) en forme de barreau et par un revêtement (23) conducteur de l'électricité de la paroi cylindrique (11) de la chambre de mesure (10).

**22.** Dispositif selon la revendication 21, caractérisé en ce que la surface de l'électrode en forme de barreau (21) est en acier inoxydable.

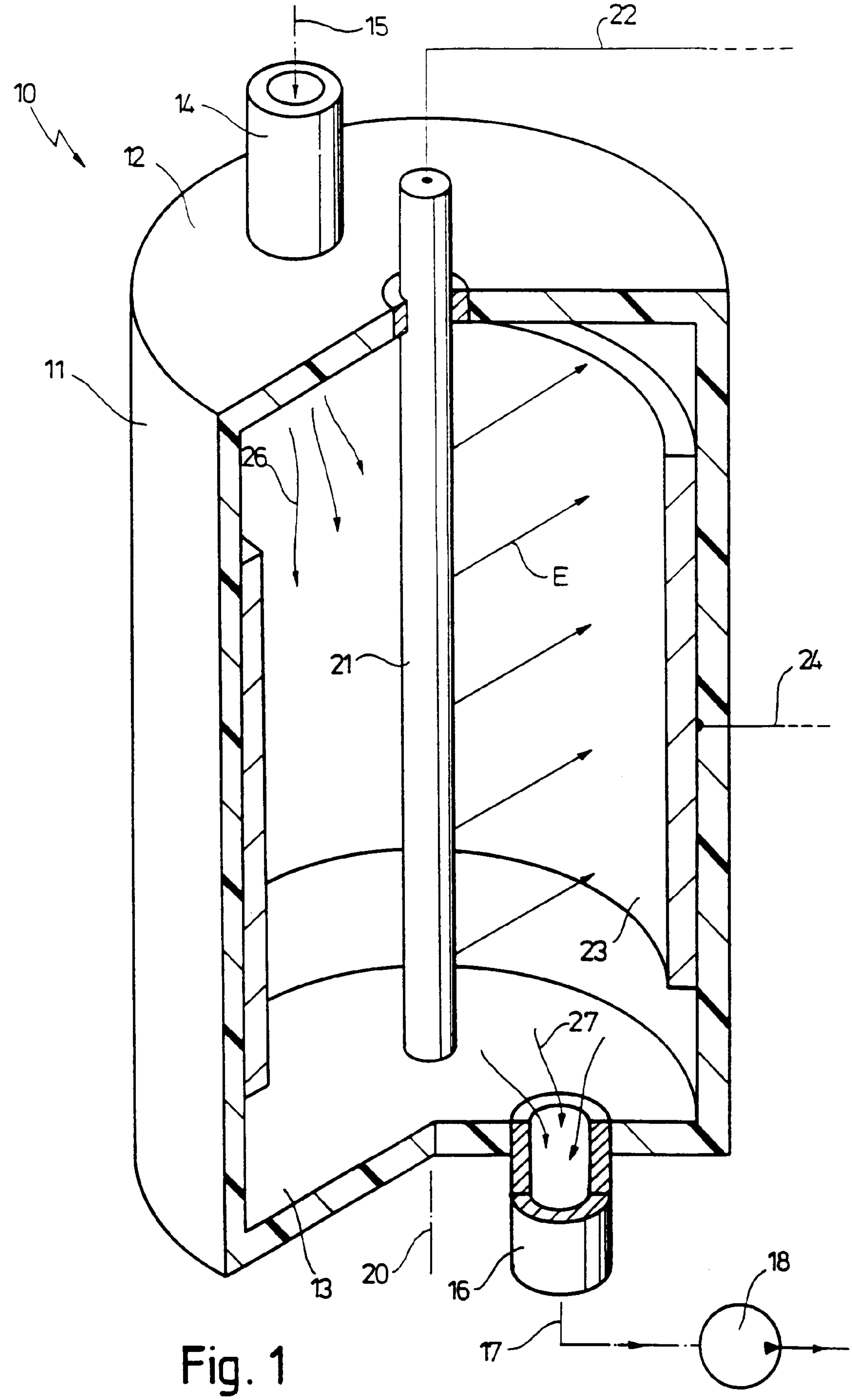


Fig. 1

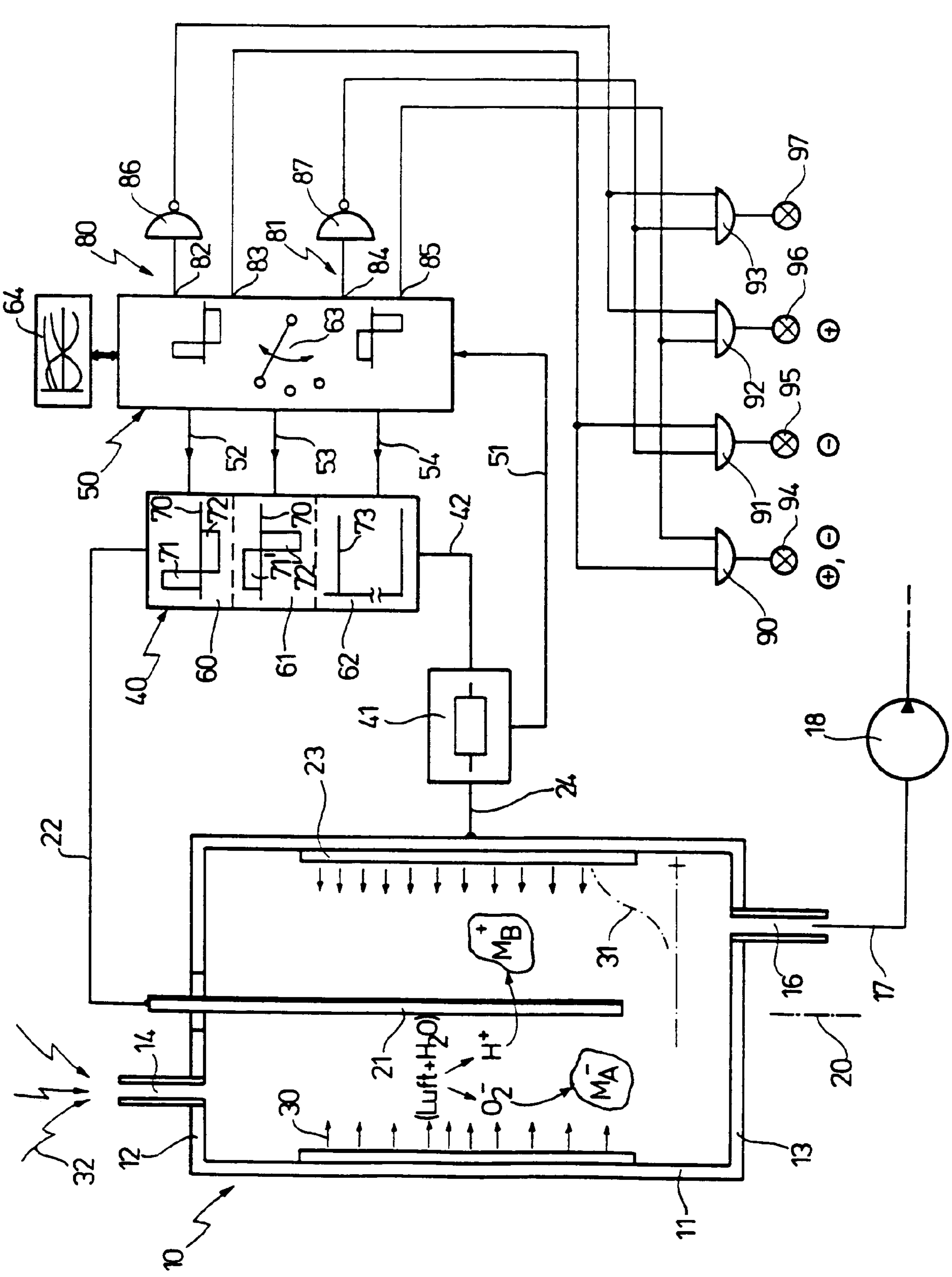
(Luft+H2O)

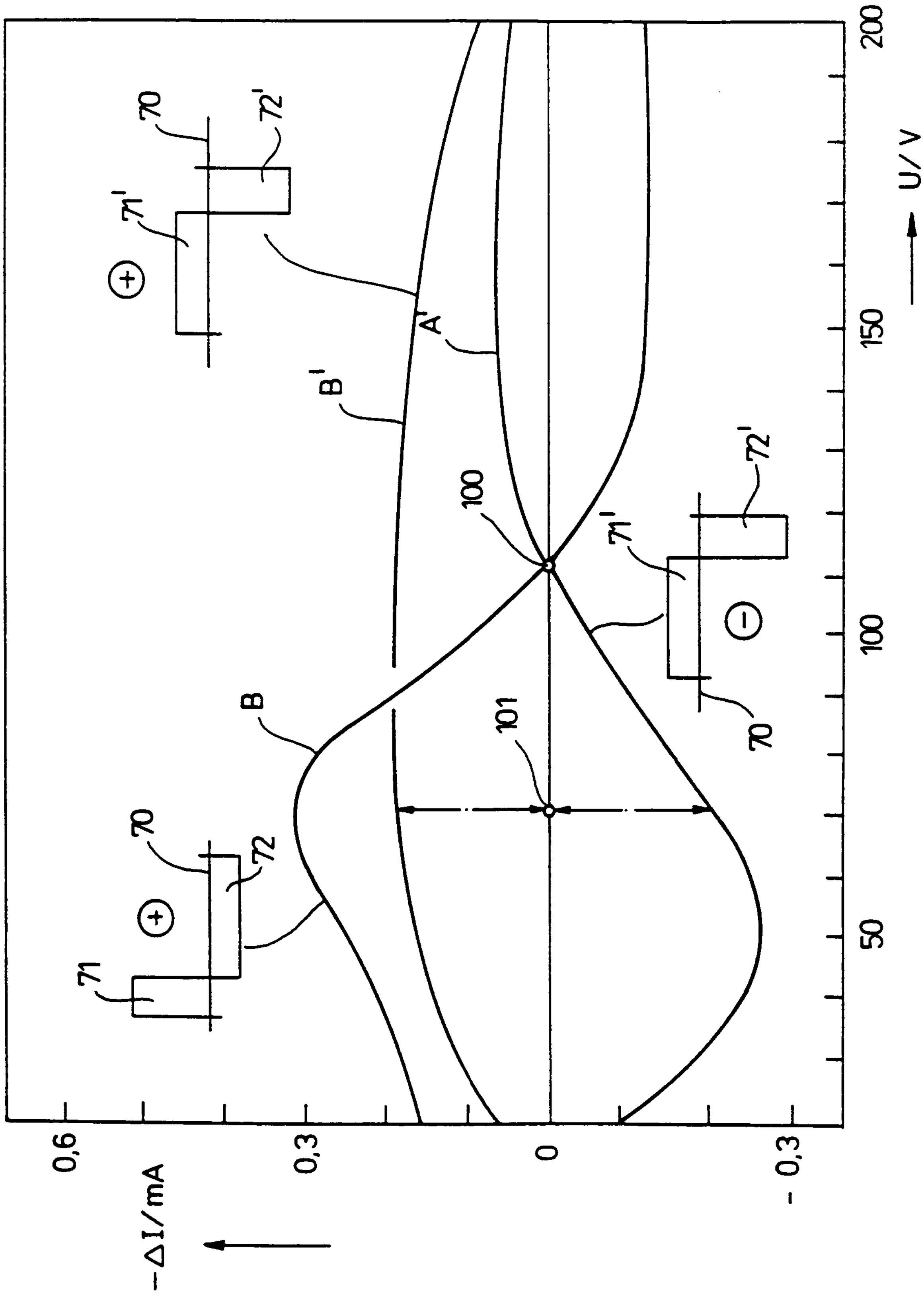


Fig. 3